# EUROPÄISCHE PATENTSCHRIFT

(11) **EP 1 839 826 B1**
(45) Veröffentlichungstag und Bekanntmachung des Hinweises auf die Patenterteilung: **07.01.2009**
(21) Anmeldenummer: 07005451.5
(22) Anmeldetag: 16.03.2007
(51) Int. Cl.: B27B 5/32, B23D 47/12

(54) **Kreissägemaschine mit Einspannvorrichtung für ein Kreissägeblatt**
Circular saw with a clamping device for a circular saw blade
Scie circulaire dotée d'un appareil de serrage pour une lame de scie circulaire

(30) Priorität: 21.03.2006 AT 4762006
(43) Veröffentlichungstag der Anmeldung: 03.10.2007
(73) Patentinhaber: Panhans Maschinenbau Gmbh, 4563 Micheldorf (AT)
(72) Erfinder: Lechner, Rudolf, 4552 Wartberg an der Krems (AT)
(74) Vertreter: Secklehner, Günter

(56) Entgegenhaltungen:
- EP-A2- 0 443 362
- DE-C2- 10 041 210

## Beschreibung

Die Erfindung betrifft eine Kreissägemaschine gemäß dem Oberbegriff des unabhängigen Anspruches 1, wie sie aus der DE 100 41 210 C2 bekannt ist.

Bei allen Typen von Kreissägemaschinen, insbesondere Tischkreissägen, Formatkreissägen und Plattenaufteilsägen, ist es von Vorteil, wenn die Lagerung und der Antrieb des Kreissägeblattes mit möglichst geringem Raumbedarf der verwendeten Komponenten erfolgt. Durch den Einsatz eines kompakt bauenden Kreissägeaggregats und die Verwendung von kleineren Komponenten können einerseits Herstellkosten reduziert werden, andererseits ist es dadurch möglich in den Kreissägemaschinen bei gleich bleibenden Außenabmessungen zusätzliche Funktionselemente einzubauen oder die Funktionalität der verwendeten Komponenten zu erweitern.

Eine Möglichkeit ein Sägeaggregat einer Kreissägemaschine mit reduzierten Abmessungen herzustellen, ist in DE 100 41 210 C2 offenbart. Diese beschreibt eine Kreissägemaschine, bei der das Sägeblatt von einem Antriebsflansch gehalten und angetrieben ist und an der Kreissägemaschine verschwenkbar gelagert ist. Dabei ist der Aufnahmeflansch durch einen Spindelflansch und einen Gegenflansch gebildet, die an zwei gelenkig miteinander verbundenen Halteteilen drehbar gelagert sind. Zum Einspannen des Kreissägeblattes zwischen Spindelflansch und Gegenflansch werden die Halteteile mittels Federkraft ähnlich wie bei einer Zange um das gemeinsame Drehgelenk zusammengedrückt; zum Lösen des Kreissägeblattes werden die beiden Halteteile entgegen der Federkraft durch einen Arbeitszylinder auseinandergedrückt. Der Antrieb des Kreissägeblattes erfolgt mittels eines Keilriemens, der um den Spindelflansch und eine Antriebsscheibe mit paralleler Drehachse geführt ist. Die Antriebsscheibe ist dabei direkt mit der Abtriebswelle eines Antriebsmotors verbunden.

Durch diese Form der Sägeblatteinspannung mit Verzicht auf eine längere Sägewelle und den getrennt von der Halterung, nämlich unterhalb angeordneten Antriebsmotor baut dieses Sägeaggregat relativ schmal und ermöglicht bei einer Verwendung z.B. in einer Formatkreissäge ein Schwenken des Kreissägeblattes sowohl nach links, als auch nach rechts. Bei herkömmlichen Formatkreissägen besteht hingegen im Allgemeinen nur die Möglichkeit das Kreissägeblatt lediglich nach einer Seite zu schwenken, da das Sägeaggregat breiter baut, insbesondere durch die Verwendung einer längeren Sägewelle. Dieses Beispiel zeigt, dass durch raumsparende Ausführung eines Sägeaggregates die Funktionalität und die Bedienerfreundlichkeit einer Kreissägemaschine deutlich erhöht werden kann.

Nachteilig bei dieser Ausführung ist jedoch, dass die gelenkige Lagerung der Halteteile beim Lösen der Einspannung eine gegenseitige Schiefstellung von Spindelflansch und Gegenflansch bewirkt, was die Verwendung von zumindest einem Pendelkugellager fast zwingend erforderlich macht.

Weiters wird die Möglichkeit, das Sägeaggregat zu schwenken, durch den weit ausladenden Antriebsmotor nach wie vor eingeschränkt und müssen im Gehäuse der Kreissägemaschine große Freiräume für das Verschwenken des Sägeaggregats mit dem Antriebsmotor freigehalten werden oder auf größer bauende, stärkere Antriebsmotore verzichtet werden.

Eine weitere Möglichkeit, die Abmessungen eines Sägeaggregats möglichst klein zu halten, ist in der DE 28 18 421 A1 dargestellt. Diese zeigt einen Spindel- oder Getriebekasten einer Maschine zum Aufteilen von Platten, mit einem Kreissägeblatt auf einer angetriebenen, horizontalen Welle, sowie einem kreisscheibenförmigen Vorschneide-Werkzeug, das in der selben Schnittebene auf einer parallelen Welle angeordnet ist. In einer Weiterbildung des Spindel- oder Getriebekastens ist das Vorschneidewerkzeug durch einen über Kreuz geführten Antriebsriemen von der Welle des Kreissägeblatts her gegenläufig angetrieben. Die für den Betrieb des Vorschneidewerkzeuges erforderliche Antriebsenergie wird dabei direkt dem Antrieb des Hauptsägeblatts entnommen, wodurch ein eigener Antriebsmotor für das Vorschneide-Werkzeug entfällt und das Ritzsägeaggregat dementsprechend weniger Raumbedarf hat. Da auch bei Formatkreissägen oder Plattenaufteilsägen vielfach ein Ritzsägeaggregat zusätzlich zum Hauptkreissägeblatt vorgesehen ist, bietet es sich auch bei diesen Anwendungsfällen an, die Antriebsenergie für das Ritzsägeaggregat vom Antrieb des Hauptsägeblattes abzuzweigen.

Nachteilig bei der beschriebenen Ausführung ist jedoch, dass die erforderliche Drehrichtungsumkehr des Ritzsägeblattes gegenüber dem Hauptsägeblatt durch einen über Kreuz geführten Antriebsriemen hergestellt wird. Um eine Zerstörung des Antriebsriemens zu vermeiden, sind deshalb bei dieser Ausführung Maßnahmen erforderlich, die eine Berührung der Riementeile am Kreuzungspunkt verhindern. Weiters ist die Ritzsäge bei dieser Ausführung beim Betrieb des Hauptsägeblattes zwangläufig ebenfalls in Betrieb, auch wenn die Ritzsäge nicht benötigt wird und aus der Arbeitsstellung in eine Ruhestellung verstellt wird.

Ausgehend von diesem Stand der Technik ist es Aufgabe der Erfindung eine Kreissägemaschine mit einem Kreissägeaggregat bereit zu stellen, das sich durch eine raumsparende, schmale Bauweise auszeichnet.

Gelöst wird diese Aufgabe durch eine Kreissägemaschine mit den Merkmalen des Anspruchs 1. Durch die Einspannung des Kreissägeblatts zwischen den an Tragelement und Spannelement befestigten Spannflanschen entfällt, wie aus dem Stand der Technik bekannt, eine herkömmliche Sägewelle, die einen Schwenkvorgang des Sägeaggregats bei den üblichen Bauformen von Kreissägemaschinen zumindest in einer Schwenkrichtung stark einschränkt. Zusätzlich bleibt jedoch der am Spannelement gelagerte zweite Spannflansch während der Verstellbewegung beim Einspann- und Lösevorgang immer parallel zum ersten Spannflansch am Tragelement. Der mit dem Spannelement bewegte zweite Spannflansch kontaktiert beim Spannvorgang das Kreissägeblatt mit der gesamten Spannfläche und nicht nur im untersten Punkt des Flanschdurchmessers. Insbesondere bei Verwendung von Kreissägeblättern mit unterschiedlichen Dicken der Grundkörper werden dadurch Biegemomente auf die Spannflansche und deren Lager vermieden. Diese Einspannvorrichtung stellt daher an die Lagerung der Spannflansche am Tragelement bzw. am Spannelement keine Anforderungen bezüglich winkeliger Wellenverlagerungen. So können anstatt von Pendelkugellagern z.B. auch einfache Rillenkugellager eingesetzt werden, da diese nicht wie beim Stand der Technik ein Achswinkelspiel benötigen.

Das Tragelement und das Spannelement können verschiedenartig ausgebildet sein, bevorzugt sind sie jedoch plattenförmig und zueinander parallel ausgebildet und schließen das Kreissägeblatt derart zwischen sich ein, dass nur der für den Schnitt benötigte Teil des Kreissägeblattes freiliegt und am nicht benötigten Teil eine Art Schutzgehäuse gebildet ist. Dieser kann auch dazu genutzt werden, die unkontrollierte Ausbreitung der beim Betrieb entstehenden Sägespäne und von Staub zu verhindern und einen an eine Späneabsaugung anschließbaren Raum zu begrenzen. Tragelement und Spannelement können jedoch auch durch einen fachwerkartigen Rahmen aufgebaut sein und müssen auch nicht parallel zueinander ausgeführt sein, solange die gegenseitige Verstellung in Achsrichtung der Spannflansche erfolgt.

Damit die beiden Spannflansche im Betrieb exakt koaxial laufen, ist es vorteilhaft, eine gegenseitige Zentrierung in Form einer Aufnahmeöffnung an einem Spannflansch und eines damit exakt zusammenpassenden Zentrieransatzes am gegenüberliegenden Spannflansch vorzusehen. In diesem Fall wird ein allfällig vorhandenes Spiel in der Führungsanordnung des Spannelements weitgehend ausgeschaltet.

Gemäß einem weiteren Anspruch kann die Führungsanordnung zur Verstellung des Spannelements eine Linearführung in Form einer Schienenführung z.B. eine Schwalbenschwanzführung umfassen, die in Verstellrichtung, also parallel zur Achsrichtung der Spannflansche, verläuft. Durch diese Ausführung besitzt die Führungsanordnung eine hohe Steifigkeit und ein geringes Führungsspiel, wodurch das Spannelement eine rein translatorische Bewegung ohne Winkeländerung ausführt.

Gemäß einem weiteren Anspruch umfasst die Führungsanordnung zumindest eine am Spannelement oder dem Tragelement befestigte, gerade Führungssäule, die in einer am Tragelement bzw. am Spannelement befestigten Führungsbuchse läuft. Diese Ausbildung der Führungsanordnung zeichnet sich ebenfalls durch eine exakt geradlinige Verstellbewegung des Spannelements aus und kann aber auch mit anderen Ausführungsarten von Linearführungen kombiniert werden. Um eine gleichmäßige Führung des Spannelements zu erzielen, ist es von Vorteil mehrere, zumindest jedoch zwei dieser Säulen Führungssäulen vorzusehen, wobei diese außerhalb des größtmöglichen Kreissägeblattdurchmessers angeordnet sein müssen. Um ein Verkanten des Spannelements bei der Verstellbewegung zu verhindern, ist es zweckmäßig, diese an mehreren Punkten zu führen.

Die Führungssäule besitzt vorzugsweise einen kreisförmigen Querschnitt, wodurch diese und die damit zusammenwirkende Führungsbuchse kostengünstig herstellbar bzw. als Zukaufteil erhältlich sind. Es sind jedoch auch andere Querschnittsformen der Führungssäule möglich, die entsprechenden Führungsbuchsen sind jedoch aufwendiger herzustellen.

Die zum Einspannen des Kreissägeblattes erforderliche Kraft kann nach einem weiteren Anspruch vorteilhaft über die Führungssäule als zwischen dem Verstellantrieb und dem Spannelement angeordnetes Zugelement eingeleitet werden. Dazu ist ein Ende der Führungssäule zugfest mit dem Spannelement verbunden und das durch die Führungsbuchse am Tragelement ragende zweite Ende der Führungssäule mit dem Verstellantrieb, der die erforderliche Zugkraft aufbringt, verbunden. Eine gleichwertige Ausführung ist gegeben, wenn ein Ende der Führungssäulen mit dem Tragelement fest verbunden ist und der Verstellantrieb mit dem durch die Führungsbuchse am Spannelement ragende Führungssäule gekoppelt ist. Bei dieser Anordnung ist die Führungssäule feststehend und der Verstellantrieb übt auf die Außenseite des Spannelements beim Spannen des Kreissägeblatts eine Druckkraft aus, die in der Führungssäule als Zugkraft wirkt.

Nach einem weiteren Anspruch besteht eine vorteilhafte Weiterbildung der Erfindung darin, dass der Verstellantrieb und das Spannelement über ein, eine Stellkraft übertragendes Kurvengetriebe, umfassend zumindest ein mit dem Verstellantrieb verbundenes Kurvenelement mit einer Steuerkurve und ein mit dem Spannelement verbundenes, mit der Steuerkurve zusammenwirkendes Abtastelement gekoppelt sind. Dazu kann das Kurvenelement in Form einer Führungskulisse ausgebildet sein, bei der die Begrenzungsfläche der Kulisse die Steuerkurve bildet und als, mit dem Spannelement verbundenes Abtastelement ein Kulissenstein, z.B. in Form eines Zapfens in der Kulisse geführt ist.

Gemäß einem weiteren Anspruch ist das Kurvenelement vorteilhaft in einer zum Tragelement weitgehend parallelen Bewegungsrichtung verstellbar und weist die Steuerkurve einen bogenförmig gekrümmten Abschnitt auf. Die Steuerkurve kann insbesondere kreisbogenförmig ausgebildet sein, was auf gängigen Fertigungseinrichtungen einfach herzustellen ist, kann jedoch auch z.B. parabelförmig, ellipsenförmig oder ähnlich gekrümmt sein. Das Kurvenelement mit dem bogenförmig gekrümmten Abschnitt der Steuerkurve wirkt wie ein Keil mit abnehmendem Keilwinkel, d.h. eine auf das Kurvenelement wirkende Verstellkraft kann durch die Übersetzungswirkung der Steuerkurve in eine vielfach größere Spannkraft in Verstellrichtung des Spannelements umgewandelt werden, insbesondere wenn die Steuerkurve annähernd rechtwinkelig zu der Führungssäule bzw. der Spannrichtung verläuft.

Um eine sichere Fixierung des Abtastelements in der gespannten Stellung zu erzielen, kann gemäß einem weiteren Anspruch die Steuerkurve im Anschluss an den bogenförmig gekrümmten Abschnitt einen zur Verstellrichtung des Kurvenelements parallelen bzw. zur Spannrichtung rechtwinkeligen, geradlinigen Sperrabschnitt aufweisen. Wird bei dieser Anordnung das Kurvenelement in eine Position verbracht, in der das Abtastelement auf dem geradlinigen Abschnitt anliegt, ist eine Bewegung des Abtastelements bzw. des Spannelements in Richtung der Lösestellung absolut blockiert und somit eine hohe Sicherheit gegenüber einem unbeabsichtigten Lösen des Kreissägeblatts aus der Spannstellung gegeben.

Nach einem weiteren Anspruch ist es von Vorteil, wenn das Kurvenelement durch eine Führungskulisse, in der das Abtastelement geführt ist, gebildet ist. Auf diese Weise kann eine zuverlässige Zwangsführung des Abtastelements und damit auch des Spannelements mit dem zweiten Spannflansch realisiert werden.

Weiters kann eine Ausführung gemäß einem weiteren Anspruch, bei der das Abtastelement in der Spannstellung eine Über-Totpunkt-Stellung an der Steuerkurve einnimmt, von Vorteil sein, da dadurch die Spannstellung auch bei einem eventuellen Wegfall einer auf das Kurvenelement wirkenden Verstellkraft stabil beibehalten wird.

Eine andere vorteilhafte Möglichkeit zur Aufbringung der erforderlichen Einspannkraft steht nach einem weiteren Anspruch darin, wenn der Verstellantrieb und das Spannelement über ein eine Stellkraft übertragendes Drehgelenkgetriebe, insbesondere ein Kniehebelgetriebe, gekoppelt sind. Bei Anordnung von mehreren gleichen Drehgelenkgetrieben kann die Führungsanordnung für die geradlinige Verstellung des Spannelements auch ohne Schienen- oder Säulenführung sondern durch die Kinematik der Drehgelenkgetriebe selbst erfolgen. Durch das hohe Übersetzungsverhältnis im Bereich des Totpunktes des Kniehebels kann mit relativ geringer Verstellkraft eine sehr hohe Einspannkraft bewirkt werden. Weiters kann damit ebenfalls eine stabile Über-Totpunkt-Stellung des Spannelements in der Spannstellung bewirkt werden.

Gemäß einem weiteren Anspruch kann der Verstellantrieb vorteilhaft einen Linearantrieb umfassen, der die geradlinige Bewegung des Spannelements entlang der Führungsanordnung bewirkt. Dabei kann die Verstellkraft direkt in Richtung der Führungsanordnung in das Spannelement eingeleitet werden oder aber auch mit Hilfe einer Vorrichtung zur Verstärkung der Verstellkraft des Verstellantriebes in eine vielfach größere Einspannkraft. Dazu können Getriebe beliebiger Bauart, insbesondere die vorgenannten Kurvengetriebe oder Kniehebelgetriebe verwendet werden.

Der Verstellantrieb kann nach einem weiteren Anspruch vorteilhaft einen Fluidzylinder umfassen. Der z.B. mit Druckluft oder Hydrauliköl arbeitende Fluidzylinder kann mit geringem Aufwand an, in den meisten Fällen bestehende Druckluftnetze bzw. Hydraulikkreise angeschlossen werden.

Gemäß einem weiteren Anspruch ist es sicherheitstechnisch vorteilhaft, wenn der Fluidzylinder bei Abfall des Fluiddrucks durch Gewichtskraft oder Federkraft selbsttätig in eine mit der Spannstellung korrespondierende Ruhestellung übergeht bzw. diese beibehält. Dadurch ist sichergestellt, dass ein gegebenenfalls auftretender Druckverlust im Fluidzylinder kein unvorhergesehenes Öffnen der Einspannvorrichtung bewirkt.

Eine andere Möglichkeit, ein unbeabsichtigtes Lösen der Einspannvorrichtung zu verhindern besteht nach einem weiteren Anspruch darin, dass der Fluidzylinder bei Abfall des Fluiddrucks durch ein Steuerventil in seiner Stellung blockiert wird. Dazu wird vom Steuerventil in einer zum Zylinder führenden Druckleitung und/oder einer Rücklaufleitung der Fließweg unterbrochen, wodurch der Fluidzylinder bzw. der im Fluidzylinder bewegliche Kolben in seiner Stellung blockiert wird.

Weiters kann der Verstellantrieb gemäß einem weiteren Anspruch einen Gewindespindeltrieb umfassen. Die Gewindespindel wird dabei vorzugsweise von einem Elektromotor angetrieben und ist vorteilhaft mit geringer Steigung ausgeführt, wodurch der Gewindespindeltrieb selbsthemmend ausgeführt ist, d.h. dass eine Drehung der Gewindespindel in der Spindelmutter nur durch ein Drehmoment auf die Gewindespindel, nicht jedoch durch eine Schubkraft auf die Spindelmutter ausgelöst werden kann. Ein Lösen der Einspannvorrichtung kann somit nur durch aktives Drehen der Gewindespindel erfolgen, wodurch eine mechanische Absicherung der Spannstellung gegeben ist.

Um eine Toleranz der Einspannvorrichtung gegenüber Dickenschwankungen des Kreissägeblatts zu erzielen, ist es von Vorteil, wenn gemäß einem weiteren Anspruch die Verstellanordnung ein das Spannelement und/oder einen Spannflansch in Richtung der Spannstellung drückendes Federelement, insbesondere eine Tellerfeder, umfasst. Dadurch ist sowohl bei dünnen Kreissägeblattgrundkörpern als auch bei dicken Sägeblattgrundkörpern eine erforderliche Mindesteinspannkraft gegeben, gleichzeitig kann die Einspannvorrichtung vor schädlichen Kraftspitzen beim Einspannen eines dicken Kreissägeblattgrundkörpers bewahrt werden.

Eine weitere vorteilhafte Ausführung der Kreissägemaschine ist nach einem weiteren Anspruch dadurch gekennzeichnet, dass die Einspannvorrichtung mittels einer Linearführung gegenüber einer, mit einem Grundgestell der Kreissägemaschine verbundenen Grundplatte in der Kreissägeblattebene verstellbar ist. Dadurch kann z.B. das Kreissägeblatt gegenüber einer Auflagefläche für Werkstücke verstellt werden und dadurch die Schnitttiefe des Kreissägeblattes verändert werden. Weiters kann diese Verstellmöglichkeit dazu genutzt werden, die Schnitttiefe an unterschiedliche Kreissägeblattdurchmesser anzupassen.

Die Kreissägemaschine erhält eine zusätzliche Funktionalität, wenn gemäß einem weiteren Anspruch die Grundplatte um eine zum Sägeblatt parallele Schwenkachse gelagert ist. Insbesondere wenn die Schwenkachse mit der Austrittsöffnung des Kreissägeblatts an einer Auflagefläche für Werkstücke zusammenfällt, ist für ein Schwenken des Kreissägeblattes nur eine schmale Austrittsöffnung erforderlich, was die Gefahr eines Verkeilens von schmalen Werkstücken oder Werkstückteilen zwischen dem Kreissägeblatt und dem Auflagetisch verringert.

Diese Anordnung der Schwenkachse kann baulich umgesetzt werden, indem die Grundplatte entlang einer kreisbogenförmigen Führungsanordnung geführt wird, wobei der Krümmungsmittelpunkt der kreisbogenförmigen Führungsanordnung die gedachte Schwenkachse bildet.

Gemäß einem weiteren Anspruch ist es von Vorteil, wenn der erste Spannflansch mittels eines Schrägkugellagers am Tragelement gelagert ist. Diese Bauart von Wälzlagern ist gut geeignet, zusätzlich zu den radialen Kräften auch die durch das Einspannen des Kreissägeblatts auftretenden, axialen Kräfte aufzunehmen.

Durch einen reibschlüssigen oder formschlüssigen Kontakt des Antriebsriemens eines an der Kreissägemaschinen angeordneten Ritzsägeaggregats mit einem angetriebenen Antriebselement des Kreissägeblatts kann auf den Einbau eines eigenen Antriebsmotors für das Ritzsägeaggregat verzichtet werden, wodurch eine raumsparende Bauart des Ritzsägeaggregats und damit auch des Kreissägeaggragats gegeben ist. Das angetriebene Antriebselement des Kreissägeblatts kann dabei durch die Motorwelle eines Antriebsmotors für das Kreissägeblatt, durch einen Hauptantriebsriemen für das Kreissägeblatt, durch Umlenkmittel für den Hauptantriebsriemen, die Sägewelle des Kreissägeblatts oder zwischen Motorwelle und Sägewelle angeordnete Getriebeelemente gebildet sein, von der die zum Antrieb des Ritzsägeblatts erforderliche Energie über den Antriebsriemen abgezweigt wird. Da der Antrieb des Ritzsägeblattes im Allgemeinen nur geringe Leistungen erfordert, kann die erforderliche Umfangskraft auf den Antriebsriemen im einfachsten Fall durch einen Reibschluss zwischen dem Antriebsriemen und dem angetriebenen Antriebselement übertragen werden, insbesondere wenn der Antriebsriemen eine gummierte Oberfläche mit hohem Reibungskoeffizient aufweist. In Fällen, in denen eine Übertragung der Umfangskraft durch Reibschluss nicht in ausreichendem Maß gewährleistet ist, kann die Übertragung der Umfangskraft auch formschlüssig erfolgen, z.B. indem der Antriebsriemen als Zahnriemen ausgeführt ist und die Verzahnung mit einer Verzahnung am angetriebenen Antriebselement kämmt.

Von Vorteil kann es sein, wenn in der Arbeitsstellung die Außenseite des Antriebsriemens mit einer Umfangsfläche des angetriebenen Antriebselements in reibschlüssigem oder formschlüssigem Kontakt steht. Dadurch kann der Antriebsriemen des Ritzsägeaggregats in derselben Ebene verlaufen, in der der Hauptantriebsriemen des Kreissägeblattes verläuft, wodurch wiederum eine schmale Ausführung des Kreissägeaggregats gegeben ist.

Der Antriebsriemen kann vorteilhaft durch einen Keilrippenriemen, einen Keilriemen oder einen Flachriemen gebildet sein, wobei der Keilrippenriemen und der Flachriemen sich durch besondere Flexibilität auszeichnen und um ein Umlenkmittel bzw. eine Welle mit geringem Durchmesser geführt werden können, der Keilriemen hingegen im Verhältnis zur übertragbaren Leistung eine sehr schmale Bauweise aufweist.

Der Antriebsriemen kann aber auch durch einen einfach verzahnten oder doppelt verzahnten Zahnriemen gebildet sein, wodurch eine schlupffreie Übertragung der Antriebsleistung zwischen dem angetriebenen Antriebselement und dem Antriebsriemen gegeben ist.

Eine vorteilhafte Weiterbildung der Kreissägemaschine besteht darin, dass das Antriebselement des Kreissägeblatts durch ein endlos umlaufendes Zugmittel, insbesondere einen Keilrippenriemen, einen Keilriemen oder einen Flachriemen gebildet ist. Diese bei Kreissägen häufig eingesetzten Antriebselemente können auch an ihrem Außenumfang hohe Reibungskoeffizienten aufweisen, wodurch eine möglichst schlupfarme Übertragung der Antriebsleistung vom Antriebselement auf den Antriebsriemen erzielt wird.

Alternativ dazu kann das Antriebselement durch einen einfach verzahnten oder doppelt verzahnten Zahnriemen gebildet sein, wodurch in Kombination mit einem ebenfalls verzahnten Antriebsriemen eine formschlüssige Übertragung der Antriebsleistung für das Ritzsägeaggregat gegeben ist. Das Antriebselement ist, wie bereits zuvor erwähnt, vorteilhaft durch den Hauptantriebsriemen des Kreissägeblatts gebildet.

Die Welle, an der das Ritzsägeblatt befestigt ist, kann durch einen an der Halterung drehbar gelagerten Antriebsflansch gebildet sein, wodurch ebenfalls eine schmale Bauweise des Sägeaggregats erzielt wird. Das Ritzsägeblatt kann dabei am Antriebsflansch fliegend gelagert sein, oder z.B. mittels einer Einspannvorrichtung in einem zweiteiligen Antriebsflansch eingespannt sein. Als Lager können dabei, wie bei der Lagerung des Kreissägeblattes, vorteilhaft Wälzlager, insbesondere Rillenkugellager oder Schrägkugellager eingesetzt werden.

Das Ritzsägeaggregat kann vorteilhaft eine Spanneinrichtung in Form eines federbelasteten, auf den Antriebsriemen wirkenden Riemenspanners aufweisen. Der Riemenspanner ist, um Verschleiß des Antriebsriemens zu vermeiden, vorzugsweise in Form einer drehbar gelagerten Spannrolle ausgebildet und bewirkt eine Riemenspannung, die einen Schlupf zwischen dem Antriebsriemen und der Welle weitgehend vermeidet. Der Riemenspanner kann vorteilhaft an einem schwenkbar gelagerten Hebel angeordnet sein, der mit einer Drehfeder zur Erzeugung der nötigen Spannkraft ausgestattet ist.

Die Führung, die die Verstellbewegung des Umlenkelements ermöglicht, kann durch einen Schwenkhebel gebildet sein, an dem das Umlenkelement drehbar gelagert ist. Bei dieser Ausführung wird das Umlenkelement auf einer Kreisbahn um eine Schwenkachse des Schwenkhebels geführt, wobei die Verstellung von der Ruhestellung in die Arbeitsstellung durch den auf den Schwenkhebel wirkenden Stellantrieb ausgeführt wird. Da es konstruktiv einfacher ist, die Schwenkachse nicht koaxial zur Drehachse des Ritzsägeblatts anzuordnen, verändert sich bei der Verstellbewegung des Umlenkelements der Achsabstand zwischen Umlenkelement und Ritzsägeblatt, was jedoch durch die Verwendung einer zuvor beschriebenen Spannvorrichtung für den Antriebsriemen ausgeglichen werden kann.

Vorteilhaft kann sein, wenn der Schwenkhebel drehbar an der Halterung gelagert ist, da die Führung des Umlenkelements durch eventuelle Verstellbewegungen der Halterung nicht beeinflusst wird. Dies ist bei Kreissägemaschinen von Vorteil, bei denen das Ritzsägeaggregat durch Verstellung der Halterung in verschiedene Positionen verbracht werden kann.

Weiters ist es auch möglich, dass das Umlenkelement gemeinsam mit der Halterung entlang der Führung verstellbar ist. Bei dieser Ausführung bleibt der Abstand zwischen der Achse des Umlenkelements und der Drehachse des Ritzsägeblattes während der Verstellbewegung unverändert, wodurch jedoch das Ritzsägeblatt eine Änderung seiner Position durch den Verstellvorgang erfährt, was jedoch im Allgemeinen ohne Auswirkung auf das Schnittergebnis bleibt, weil die Bewegung in der Schnittebene selbst erfolgt.

Der Stellantrieb für die Aktivierung des Ritzsägeaggregats ist beispielsweise durch einen Fluidzylinder in Form eines Pneumatikzylinders oder eines Hydraulikzylinders gebildet. Dabei kann zur Versorgung mit Antriebsenergie vorteilhaft auf ein in vielen Fällen ohnehin vorhandenes Druckluftnetz bzw. Hydrauliksystem zugegriffen werden.

Durch die Verwendung eines Winkelgetriebes muss eine Motorwelle des Antriebsmotors nicht parallel zur Sägewelle angeordnet sein und da die maximale Abmessung der bei Kreissägemaschinen vorzugsweise eingesetzten Antriebsmotore ihre Länge in Richtung der Motorwelle ist, kann die Gesamtbreite des Kreissägeaggregats durch die nicht parallele Anordnung der Motorwelle zur Sägewelle deutlich reduziert werden.

Von Vorteil kann es sein, wenn sich die Achsen der Motorwelle und der Antriebswelle schneiden, da für die Verbindung von einander winkelig schneidenden Wellenachsen eine Vielzahl von Winkelgetrieben am Markt erhältlich ist.

Vorteilhaft ist es, wenn die Achsen der Motorwelle und der Antriebswelle zueinander etwa rechtwinkelig angeordnet sind. Dadurch ist nicht mehr die Länge des Antriebsmotors, sondern sein Durchmesser bzw. seine Höhe oder Breite für die Baubreite des Kreissägeaggregats maßgeblich. Da in vielen Fällen z.B. bei Tischkreissägen, Formatkreissägen oder Plattenaufteilsägen auch die Bauhöhe des Kreissägeaggregats ergonomisch günstige Höhen der Auflagefläche für die Werkstücke ergeben soll, ist es konstruktiv vorteilhaft, wenn die Motorwellen horizontal ausgerichtet ist. Bei Kreissägebauarten, bei denen die Auflagefläche nicht horizontal ist, ist es in vielen Fällen von Vorteil, wenn die Motorwellenachse parallel zur Auflagefläche der Werkstücke angeordnet ist.

Das Winkelgetriebe kann als Kegelradgetriebe ausgebildet sein, wobei eine große Vielfalt von Bauarten und Baugrößen die Auswahl eines für den Kreissägeantrieb geeigneten Winkelgetriebes erleichtert. Die Kegelräder selbst können geradverzahnt, schrägverzahnt oder bogenverzahnt ausgeführt sein, wobei aufgrund der höheren Laufruhe bei hohen Drehzahlen beim Kreissägeantrieb die beiden letzteren Ausführungsvarianten bevorzugt eingesetzt werden.

Weiters kann das Winkelgetriebe auch als Schraubwälzgetriebe, insbesondere als Kegelrad-Schraubgetriebe ausgebildet sein, wodurch die Motorwelle und die Antriebswelle zueinander einen Abstand aufweisen können, d.h. einander kreuzen, wodurch die Möglichkeiten der baulichen Anordnung des Antriebsmotors erweitert werden.

Um die für eine gute Schnittqualität der Kreissäge erforderliche hohe Betriebsdrehzahl des Kreissägeblatts zu erzielen, ist es von Vorteil, wenn der am Hauptantriebsriemen wirksame Durchmesser des Antriebsrades größer ist, als der am Hauptantriebsriemen wirksame Abtriebsdurchmesser der angetriebenen Sägewelle. Dadurch liegt eine Übersetzung ins Schnelle vor und die Betriebsdrehzahl des Kreissägeblatts kann dadurch deutlich über der höchst zulässigen Betriebsdrehzahl des Winkelgetriebes liegen. So kann z.B. trotz einer höchst zulässigen Drehzahl des Winkelgetriebes von 3.000/min mit einem Übersetzungsverhältnis von 1:2 eine Betriebsdrehzahl des Kreissägeblatts von 6.000/min erreicht werden.

Eine andere Möglichkeit die Betriebsdrehzahl des Kreissägeblatts gegenüber der Drehzahl des Antriebsmotors anzuheben besteht darin, dass ein Übersetzungsverhältnis des Winkelgetriebes einen Wert kleiner als 1 aufweist und dadurch von der Motorwelle zur Antriebswelle eine Übersetzung ins Schnelle erfolgt.

Um eine Sägewelle mit kurzer Bauform und dadurch eine schmale Gesamtbaubreite des Kreissägeaggregats zu erzielen, ist es von Vorteil, wenn die Sägewelle durch einen drehbar gelagerten Antriebsflansch gebildet ist. Die Sägewelle baut dadurch sehr kurz, wodurch eine geringe Baubreite des Kreissägeaggregats möglich ist. Der Antriebsflansch ist dabei vorteilhaft durch zwei Spannflansche gebildet, zwischen denen das Kreissägeblatt eingespannt ist und die auf relativ zueinander geradlinig verstellbaren Platten drehbar gelagert sind.

Der Hauptantriebsriemen der Kreissägemaschine kann vorteilhaft durch einen Keilrippenriemen (Poly-V-Keilriemen) gebildet sein. Diese Riemenart besitzt aufgrund der niedrigen Bauhöhe ein geringes Widerstandsmoment und kann deshalb um Umlenkmittel oder Wellen mit kleinerem Durchmesser geführt werden, als z.B. herkömmliche Keilriemen.

Alternativ dazu kann der Hauptantriebsriemen der Kreissägemaschine durch einen einfach verzahnten oder doppelt verzahnten Zahnriemen gebildet sein. Durch die Verwendung eines Zahnriemens kann der Schlupf zwischen dem Hauptantriebsriemen und dem ebenfalls verzahnten Antriebsrad ausgeschaltet werden und/oder der Schlupf zwischen der Außenseite eines doppelt verzahnten Zahnriemens und damit in Antriebsverbindung stehenden Getriebeelementen der Kreissägemaschine ausgeschaltet werden.

Eine zusätzliche Funktionalität bzw. Bedienerfreundlichkeit der Kreissägemaschine wird dadurch erreicht, dass das Kreissägeaggregat, also die Sägewelle mit dem Kreissägeblatt, zusammen mit dem Sägeblattantrieb, um eine Schwenkachse verstellbar ist, die parallel zu einer Schnittebene des Kreissägeblatts und einer Auflageebene für Werkstücke ausgerichtet ist. Dadurch können verschiedene Winkel zwischen Auflageebene für Werkstücke und der Schnittebene eingestellt werden und verschiedene Schnittwinkel am Werkstück bewirkt werden. Die Verstellung des Kreissägeaggregats um die Schwenkachse erfolgt dabei mit den, aus dem Stand der Technik bekannten Mitteln.

Eine weitere vorteilhafte Ausbildung der Kreissägemaschine besteht darin, dass die Schwenkachse in der Schnittlinie zwischen Schnittebene und in einer Werkstückauflageebene verläuft. Die Öffnung, durch die das unter der Werkstückauflageebene gelagerte Kreissägeblatt herausragt und gegenüber der Werkstückauflageebene vorragt, kann dadurch schmal gehalten werden, wodurch bei schmalen Werkstücken die Gefahr verringert wird, dass das Werkstück oder Teile des Werkstücks zwischen Kreissägeblatt und Werkstückauflagetisch in die Öffnung eindringen können.

Um den für das Schwenken des Kreissägeaggregats benötigten Raumbedarf möglichst zu verringem, ist es von Vorteil, wenn die Motorwelle parallel zur Schwenkachse ausgerichtet ist. Dadurch kann, wie zuvor beschrieben, die Bauhöhe eines Kreissägeaggregats gering gehalten werden.

Eine erfindungsgemäße Kreissäge zeichnet sich dadurch aus, dass das Kreissägeaggregat aufgrund der schmalen Bauweise bei minimalem Raumbedarf geschwenkt werden kann, insbesondere nach beiden Seiten des Kreissägeblattes. So kann z.B. das Kreissägeaggregat durch die Verwendung der Einspannvorrichtung mit den gegeneinander verstellbaren Spannflanschen schlank gebaut werden und durch den Wegfall eines eigenen Ritzsägeantriebsmotors der Abstand zwischen Tragelement und Spannelement besonders gering gehalten werden kann.

Weiters kann für Kreissägemaschinen durch die Kombination aus Einspannvorrichtung mit gegeneinander verstellbaren Spannflanschen und Kreissägeantrieb mittels Winkelgetriebe ein besonders raumsparendes Kreissägeaggregat geschaffen werden.

Die Erfindung wird im Nachfolgenden anhand des in den Zeichnungen dargestellten Ausführungsbeispiels näher erläutert.

Es zeigen:
- Fig. 1: ein in einer erfindungsgemäßen Kreissägemaschine einsetzbares Kreissägeaggregat in vereinfachter, perspektivischer Darstellung;
- Fig. 2: eine Draufsicht auf das Kreissägeaggregat gemäß Fig. 1, in vereinfachter, schematischer Darstellung;
- Fig. 3: eine perspektivische Ansicht des Kreissägeaggregats gemäß Fig. 1 in geöffnetem Zustand und bei entferntem Kreissägeblatt in vereinfachter, schematischer Darstellung;
- Fig. 4: eine Ansicht des Ritzsägeaggregats in vereinfachter, schematischer Darstellung;
- Fig. 5: einen Schnitt durch die Einspannvorrichtung des Kreissägeaggregats.

Einführend sei festgehalten, dass in den unterschiedlich beschriebenen Figuren bzw. Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

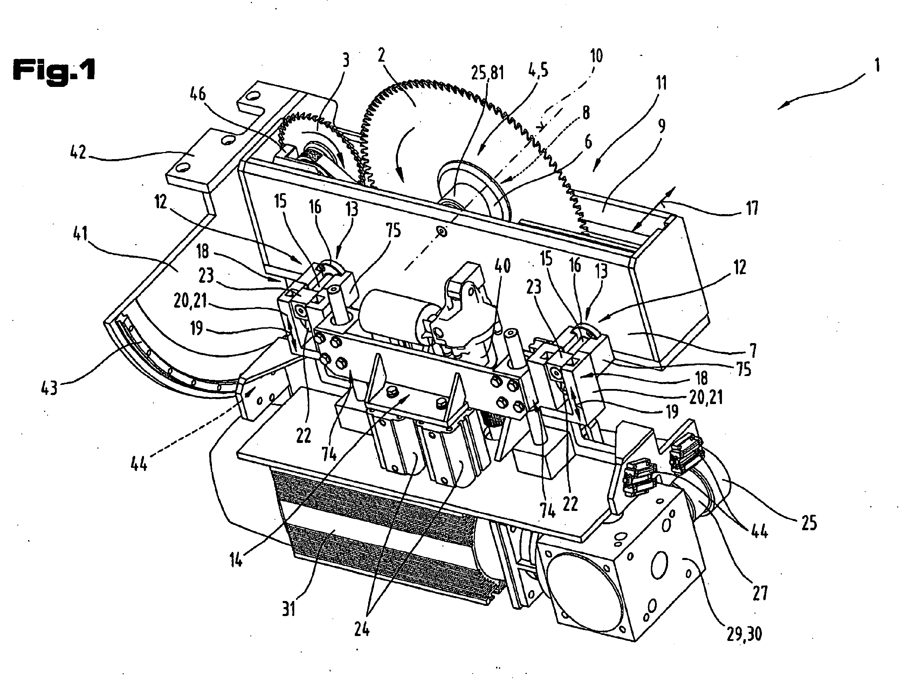

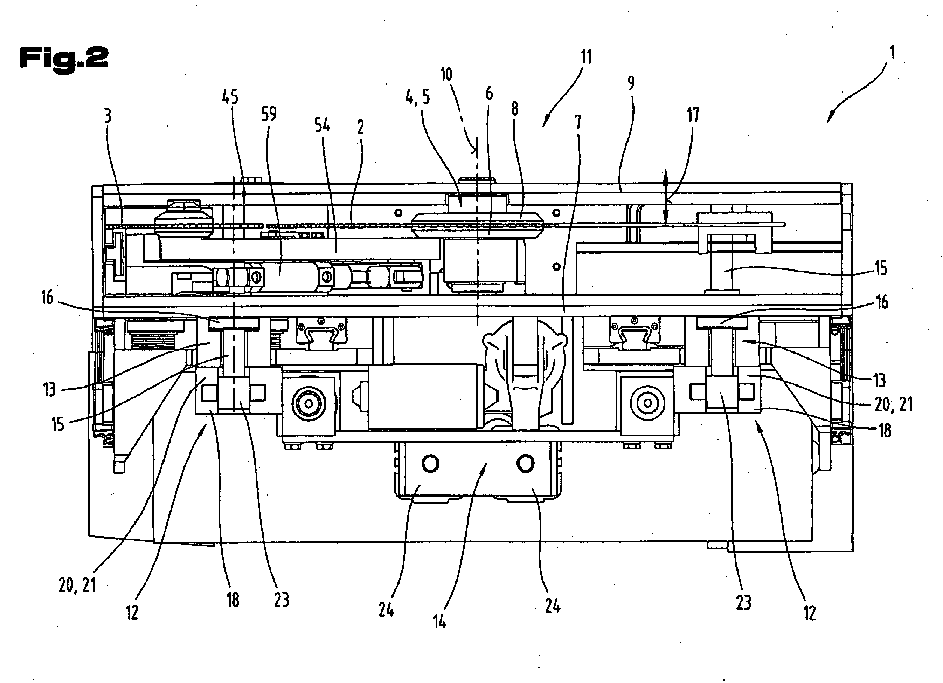

Fig. 1 und Fig. 2 zeigen ein Kreissägeaggregat 1 für eine erfindungsgemäße Kreissägemaschine, die in verschiedenster Bauart, z.B. als Tischkreissäge, Formatkreissäge, Plattenaufteilsäge, oder sonstige Sägemaschine ausgeführt sein kann. Die Kreissägemaschine ist aus Gründen der Einfachheit in den Figuren deshalb nicht dargestellt. Als Schneidwerkzeug enthält das Kreissägeaggregat 1 im Ausführungsbeispiel ein Kreissägeblatt 2 sowie ein Ritzsägeblatt 3, wobei die Drehrichtung des Ritzsägeblattes 3 entgegengesetzt zur Drehrichtung des Kreissägeblatts 2 ist. Dadurch wird, wie aus dem Stand der Technik bekannt, an beiden Oberflächen eines plattenförmigen Werkstücks, eine ausrissfreie Schnittkante erzielt. Das Ritzsägeblatt 3 ist Teil eines Ritzsägeaggregats, das weiter unten beschrieben wird. Das Kreissägeblatt 2 ist auf einer drehbar gelagerten Sägewelle 4 gelagert, die durch einen Antriebsflansch 5 gebildet ist. Der zweiteilige Antriebsflansch 5 wiederum umfasst einen ersten Spannflansch 6, der drehbar an einem Tragelement 7 gelagert ist, sowie einen zweiten Spannflansch 8, der drehbar an einem Spannelement 9 gelagert ist. Die beiden Spannflansche 6 und 8 sind koaxial zueinander angeordnet und bilden eine Kreissägeblattachse 10, um die sich das Kreissägeblatt 2 im Betrieb dreht. Das Tragelement 7 mit dem ersten Spannflansch 6 und das Spannelement 9 mit dem zweiten Spannflansch 8 sind Teil einer Einspannvorrichtung 11 für das Kreissägeblatt 2, wobei das Zentrum des Kreissägeblatts 2 mit einer Spannkraft zwischen dem ersten Spannflansch 6 und dem zweiten Spannflansch 8 im Kreissägeaggregat 1 drehbar befestigt ist. Eine Lösestellung, in der das Kreissägeblatt 2 aus dem Kreissägeaggregat 1 entnommen werden kann bzw. ein Kreissägeblatt 2 in das Kreissägeaggregat 1 eingesetzt werden kann, wird dadurch bewirkt, dass das Spannelement 9 mit dem zweiten Spannflansch 8 relativ zum Tragelement 7 mit dem ersten Spannflansch 6 geradlinig und in Richtung der Kreissägeblattachse 10, also auch in Achsrichtung der Spannflansche 6, 8 verstellbar ist. Die dem Kreissägeblatt 2 zugewandten Spannflächen der Spannflansche 6, 8 bleiben während dieses Verstellvorgangs zueinander parallel. Für die Durchführung des Verstellvorgangs zwischen der Spannstellung und der Lösestellung bzw. umgekehrt, umfasst die Einspannvorrichtung 11 weiters eine Verstellanordnung 12, die eine Führungsanordnung 13 sowie einen Verstellantrieb 14 umfasst. Zur Führungsanordnung 13, die die Geradführung des Spannelements 9 im Bezug auf das Tragelement 7 bewirkt, gehören zwei Führungssäulen 15, die parallel zur Kreissägeblattachse 10 ausgerichtet sind, und die jeweils mit einem Ende am Spannelement 9 befestigt sind. Das zweite Ende der Führungssäulen 15 ist jeweils durch eine in das Tragelement 7 eingesetzt Führungsbuchse 16 geführt, wodurch die Führungssäulen 15 das Tragelement 7 durchragen. Die Führungssäulen 15 sind dabei weitgehend spielfrei in den Führungsbuchsen 16 geführt, die eine Wälzführung oder eine Gleitführung bilden können. Die Verstellmöglichkeit des Spannelements 9 wird in Fig. 1 durch den Pfeil 17 angedeutet. Die zum Einspannen des Kreissägeblatts 2 erforderliche Kraft wird durch die Führungssäulen 15 in das Spannelement 9 eingeleitet. Die Führungssäulen 15 wirken in dieser Ausführung daher in der Spannstellung als Zugelemente, in alternativen Ausführungen ist es jedoch auch möglich, dass die Kraft zum Spannen des Kreissägeblatts 2 durch sonstige Mittel in das Spannelement 9 eingeleitet werden und die Führungssäulen 15 reine Führungsaufgabe erfüllen.

Die Verstellkraft wird vom Verstellantrieb 14 über zwei Kurvengetriebe 18 als Spannkraft auf die zwei Führungssäulen 15 übertragen. Ein Kurvengetriebe 18 umfasst dabei ein in Richtung des Pfeils 19 verstellbares Kurvenelement 20, das im Ausführungsbeispiel durch eine Führungskulisse 21 gebildet ist. Die Führungskulisse 21 bildet eine Steuerkurve 22 aus, die mit einem Abtastelement 23 zusammenwirkt, das am freien Ende der Führungssäule 15 befestigt ist. Die Steuerkurve 22 umfasst einen bogenförmig, insbesondere kreisbogenförmig gekrümmten Abschnitt und einen daran anschließenden geradlinigen Abschnitt, in dem das Abtastelement 23 in der Spannposition der Einstellvorrichtung 11 positioniert ist. Eine Verstellung des Kurvenelements 20 in Richtung des Pfeils 19 bewirkt dadurch eine Verstellung der Führungssäule 15 und somit auch des Spannelements 9 in Richtung des Pfeils 17, wodurch das Einspannen bzw. Lösen des Kreissägeblatts 2 bewirkt wird. Zur Verstellung der Kurvenelemente 20 sind diese mit dem Verstellantrieb 14 gekoppelt, der als Linearantrieb in Form zweier Fluidzylinder 24 ausgeführt ist. Die Ansteuerung der Fluidzylinder 24 erfolgt über ein nicht dargestelltes 5-3-Wegeventil, das in seiner durch Federkraft eingestellten Nullstellung den Zu- und Ablauf aus den Fluidzylindern 24 sperrt, wodurch bei einem eventuellen Abfall des Fluiddrucks eine Verstellbewegung der Einspannvorrichtung 11 blockiert und dadurch verhindert wird.

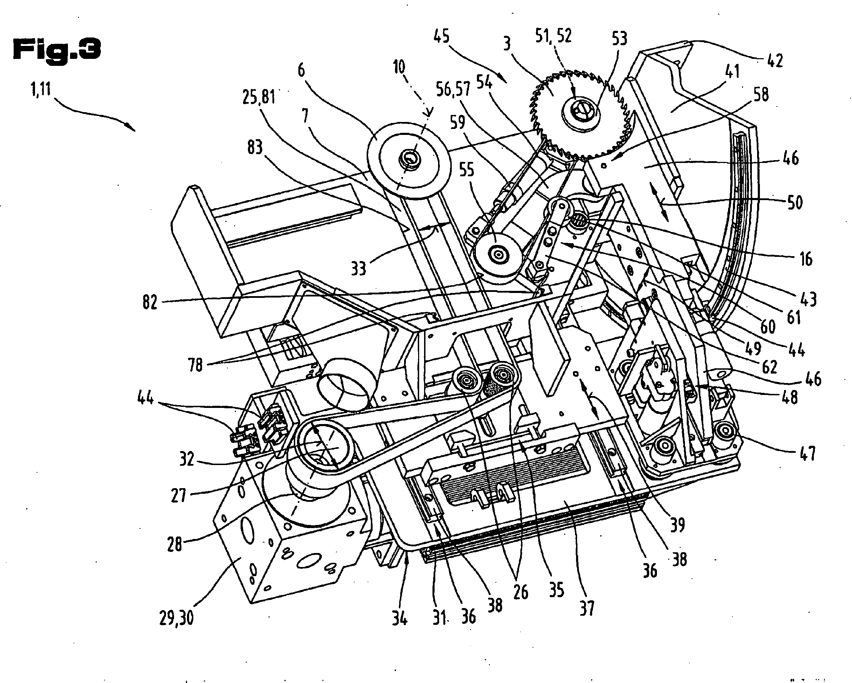

Fig. 3 zeigt, das durch Entfernen des Spannelements 9 geöffnete Kreissägeaggregat 1 ohne das Kreissägeblatt in perspektivischer, vereinfachter Darstellung. Man erkennt den am Tragelement 7 drehbar gelagerten ersten Spannflansch 6, der zusammen mit dem nicht dargestellten, zweiten Spannflansch 8 das Kreissägeblatt 2 fixiert und Bestandteil des Antriebes ist. Der Antrieb des ersten Spannflansches 6 erfolgt durch einen Hauptantriebsriemen 25, der als Keilrippenriemen ausgeführt ist. Der Spannflansch 6 besitzt dazu am Außenumfang umlaufende Rillen, die mit den Keilflanken des Keilrippenriemens zusammenwirken. Der Hauptantriebsriemen 25 wird durch zwei Umlenkrollen 26 etwa um 90 ° umgelenkt und ist von einem Antriebsrad 27, das auf einer Antriebswelle 28 fliegend angeordnet ist, angetrieben. Die Antriebswelle 28 verläuft parallel zur Kreissägeblattachse 10 und ist Ausgang eines Winkelgetriebes 29. Das Winkelgetriebe 29 ist als Kegelradgetriebe 30 ausgeführt, das von einem Antriebsmotor 31 angetrieben ist. Das Winkelgetriebe 29 besitzt im Ausführungsbeispiel ein Übersetzungsverhältnis von 1, d.h. die Drehzahl des Antriebsrades 27 entspricht der Drehzahl des Antriebsmotors 31. Es kann jedoch auch ein anderes Übersetzungsverhältnis, insbesondere eine Übersetzung ins Schnelle eingesetzt werden, z.B. um die Antriebsdrehzahl des Kreissägeblattes 2 gegenüber der Motordrehzahl zu erhöhen. Eine weitere Möglichkeit, die Drehzahl des Kreissägeblatts 2 gegenüber der Motordrehzahl anzuheben, besteht darin, indem ein Antriebsdurchmesser 32 des Antriebsrades 27 größer ausgeführt wird, als ein Abtriebsdurchmesser 33 am ersten Spannflansch 6.

Der Achswinkel zwischen einer Motorwelle 34 des Antriebsmotors 31 und der Antriebswelle 28 beträgt 90 °, wodurch die Längsachse des Antriebsmotors 31 parallel zur Schnittebene des Kreissägeblatts 2 ausgerichtet ist. Für die Baubreite des Kreissägeaggregats 1 in Richtung der Kreissägeblattachse 10 ist dadurch nicht die Länge des Antriebsmotors 31 maßgeblich, sondern dessen wesentlich geringere Breite bzw. Höhe oder sein Durchmesser.

Zur Einstellung der Spannung des Hauptantriebsriemens 25 sind die Umlenkrollen 26 mittels einer Verstellvorrichtung 35 gegenüber der Kreissägeblattachse 10 und dem Antriebsrad 27 verschiebbar gelagert.

Innerhalb des Kreissägeaggregats 1 ist die Einspannvorrichtung 11 zusammen mit der Verstellanordnung 12 und dem Hauptantrieb mittels einer Linearführung 36 relativ zu einer Grundplatte 37 verstellbar. Dazu ist das Tragelement 7 auf Führungsschienen 38 gelagert, die parallel zur Schnittebene des Kreissägeblatts 2 ausgerichtet sind. Die Verstellbarkeit des Tragelements 7 relativ zur Grundplatte 37 ist in Fig. 3 durch einen Pfeil 39 angedeutet. Diese Verstellmöglichkeit dient dazu, das Kreissägeblatt 2 zusammen mit der gesamten Einspannvorrichtung 11, der Verstellanordnung 12, dem Hauptantriebsriemen 25, dem Winkelgetriebe 29, sowie dem Antriebsmotor 31 gegenüber einem Grundgestell der Kreissägemaschine verstellen zu können, z.B. um eine Schnitttiefe einzustellen, oder die Kreissägemaschine an unterschiedliche Durchmesser des Kreissägeblatts 2 anzupassen. Die zur Verstellung erforderliche Kraft wird zwischen Tragelement 7 und Grundplatte 37 durch einen Verstellzylinder 40 (siehe Fig. 1) aufgebracht.

Um die Schnittebene des Kreissägeblatts 2 schwenken zu können, ist das Kreissägeaggregat 1 schwenkbar an einem nicht dargestellten Grundgestell, z.B. an der Unterseite eines Auflagetisches für Werkstücke, angeordnet. Die Lagerung des Kreissägeaggregats 1 in der Kreissägemaschine umfasst dazu zwei Schwenkführungsplatten 41 (in Fig. 1 und Fig. 3 ist jeweils nur eine Schwenkführungsplatte 41 dargestellt), wobei die Schwenkführungsplatten 41 mit Montageplatten 42 an der Unterseite eines Auflagetisches befestigt sind; das Kreissägeblatt 2 ragt dabei durch eine Öffnung über den Auflagetisch vor. An den zwei Schwenkführungsplatten 41, zwischen denen das Kreissägeaggregat 1 angeordnet ist, ist jeweils eine Schwenkführungsschiene 43 befestigt, an der die Grundplatte 37 mittels Führungselementen 44 geführt ist. Die Krümmungsmittelpunkte der Schwenkführungsschienen 43 sind vorzugsweise so gewählt, dass sie in der Schnittebene des Kreissägeblatts 2 sowie gleichzeitig in der Auflageebene für Werkstücke liegen und bilden dadurch die eine Schwenkachse für das Kreissägeblatt 2.

Fig. 3 zeigt weiters ein Ritzsägeaggregat 45, das, wie aus dem Stand der Technik bekannt, zum ausrissfreien Vorritzen von Werkstückoberflächen eingesetzt wird. Die Schnittebene des Ritzsägeblatts 3 fällt dabei mit der Schnittebene des Kreissägeblatts 2 zusammen. Das Ritzsägeaggregat 45 umfasst eine Halterung 46, die mittels einer Querführung 47 und einer Höhenführung 48 verstellbar an der Grundplatte 37 gelagert ist. Durch die Querführung 47 ist die Halterung 46 in Richtung eines Pfeils 49 parallel zur Kreissägeblattachse 10 verstellbar, wodurch die Schnittebene des Ritzsägeblatts 3 genau in die Schnittebene des Kreissägeblatts 2 verstellt werden kann; durch die Höhenführung 48 ist die Halterung 46 in Richtung eines Pfeils 50, als rechtwinkelig zur Kreissägeblattachse 10 verstellbar, wodurch die Schnitttiefe des Ritzsägeblatts 3 an das jeweilige Werkstück angepasst werden kann.

Das Ritzsägeblatt 3 ist auf einer Welle 51 fliegend gelagert. Diese ist durch einen an der Halterung 46 drehbar gelagerten Antriebsflansch 52 gebildet, gegen den das Ritzsägeblatt 3 mit Hilfe eines Gegenflansches 53 gespannt wird. Der Antrieb des Ritzsägeblatts 3 erfolgt über einen Antriebsriemen 54, der um den Antriebsflansch 52 und ein Umlenkelement 55 geführt ist. Das Umlenkelement 55 in Form einer Umlenkrolle ist drehbar an einem Schwenkhebel 56 gelagert, der eine Führung 57 für eine Verstellbewegung des Umlenkelements 55 bildet. Der Schwenkhebel 56 ist mittels eines Schwenklagers 58 mit der Halterung 46 verbunden und kann mittels eines Stellantriebes 59 in Form eines Fluidzylinders, insbesondere Pneumatikzylinders verstellt werden. Der Antrieb des Ritzsägeblatts 3 erfolgt, indem der Schwenkhebel 56 mit dem Umlenkelement 55 mittels des Stellantriebes 59 in eine Arbeitsposition verbracht wird, in der der Antriebsriemen 54 in reibschlüssigem Kontakt mit einem angetriebenen Antriebselement 81, im Ausführungsbeispiel dem Hauptantriebsriemen 25 des Kreissägeblatts 2 steht. Die zum Betrieb des Ritzsägeblattes 3 erforderliche Antriebsenergie wird demnach vom Hauptantrieb des Kreissägeblatts 2 abgezweigt und das Ritzsägeaggregat 45 benötigt keinen eigenen Antriebsmotor.

Die Übertragung erfolgt im Ausführungsbeispiel zwischen Hauptantriebsriemen 25 und Antriebsriemen 54 durch Reibschluss, es ist jedoch bei Verwendung von Riemen mit einer außen liegenden Verzahnung alternativ eine Übertragung durch Formschluss möglich. Der Drehsinn des Antriebsriemens 54 des Ritzsägeaggregats 45 ist gegensinnig zum Drehsinn des Hauptantriebsriemens 25 des Kreissägeblatts 2, wodurch das Ritzsägeblatt 3, wie erforderlich, gegenläufig zum Kreissägeblatt 2 angetrieben ist. Mittels des Stellantriebes 59 kann der Schwenkhebel 56 mit dem Umlenkelement 55 in eine Ruhestellung verstellt werden, in der der Antriebsriemen 54 nicht in Kontakt mit dem Hauptantriebsriemen 25 steht. Dadurch kann das Ritzsägeblatt 3 außer Betrieb gesetzt werden und z.B. durch Demontage des Ritzsägeblatts 3 oder Absenken mittels der Höhenführung 48 aus dem Arbeitsbereich verbracht werden, um Schnitte ohne Vorritzvorgang auszuführen.

Das Ritzsägeaggregat 45 umfasst weiters eine Spanneinrichtung 60 mit einem auf dem Antriebsriemen 54 wirkenden Spannmittel 61 in Form einer Spannrolle. Diese ist an einem schwenkbaren Spannhebel 62 drehbar gelagert, der seinerseits am Schwenkhebel 56 gelagert ist und relativ zu diesem mittels einer Drehfeder in Richtung des Antriebsriemens 54 gedrückt wird, wodurch im Antriebsriemen 54 eine ausreichende Spannung zur Vermeidung von Schlupf aufrechterhalten wird. Der Antriebsriemen 54 ist als Keilrippenriemen ausgeführt, kann jedoch auch eine andere Bauart aufweisen, z.B. als Keilriemen, Flachriemen, einfach oder doppelt verzahnter Zahnriemen ausgeführt sein.

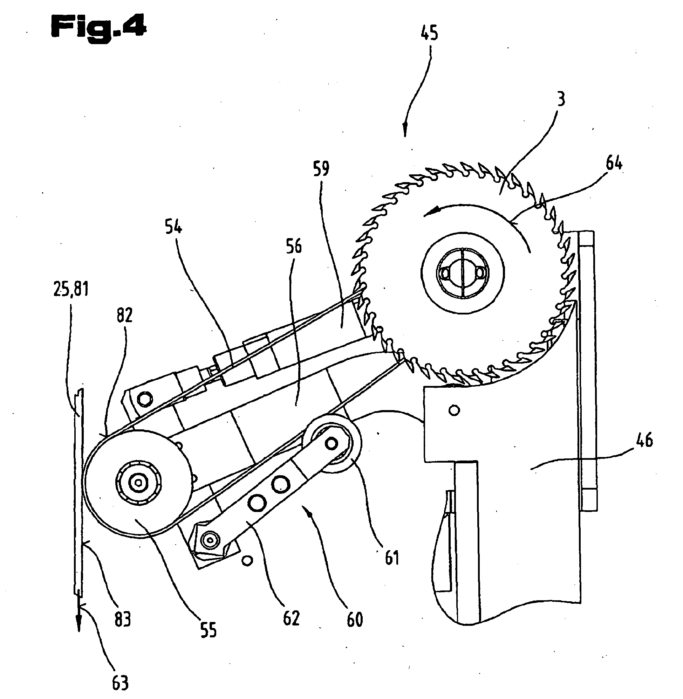

Fig. 4 zeigt eine Ansicht des Ritzsägeaggregats 45, bei der sich der Schwenkhebel 56 mit dem Umlenkelement 55 in Arbeitsstellung befindet, wodurch der Antriebsriemen 54 in Kontakt mit dem Hauptantriebsriemen 25 steht. Durch eine gummierte Außenseite 82 des Antriebsriemens 54 und eine ebenfalls gummierte Umfangsfläche 83 des Antriebselements 81, im Ausführungsbeispiel des Hauptantriebsriemens 25, ist eine zuverlässige und schlupfarme Kraftübertragung zum Ritzsägeaggregat 45 gewährleistet. Man erkennt weiters, dass die Antriebsrichtung des Hauptantriebsriemens 25 - gemäß Pfeil 63 - eine gegenläufige Drehrichtung des Ritzsägeblatts 3 - gemäß Pfeil 64 - bewirkt.

Abweichend von der dargestellten Ausführungsform kann der Antrieb des Antriebsriemens 54 des Ritzsägeaggregats 45 auch durch Kontakt des Antriebsriemens 54 mit einem sonstigen Antriebselement 81 des Kreissägeantriebs erfolgen, z.B. durch Kontakt mit einer Umfangsfläche 83 eines Spannflansches 6, 8 oder einer Umlenkrolle 26. Weiters kann das Antriebselement 81 in Form eines Hauptantriebsriemens 25 im Bereich der Kontaktstelle mit dem Antriebsriemen 54 durch ein Stützelement, insbesondere einer Stützrolle an der Innenseite unterstützt sein, wodurch ein Abweichen des Hauptantriebsriemens 25 unterbunden ist und die Kontaktkraft zwischen Antriebsriemen 54 und Hauptantriebsriemen 25 nicht dadurch verloren geht.

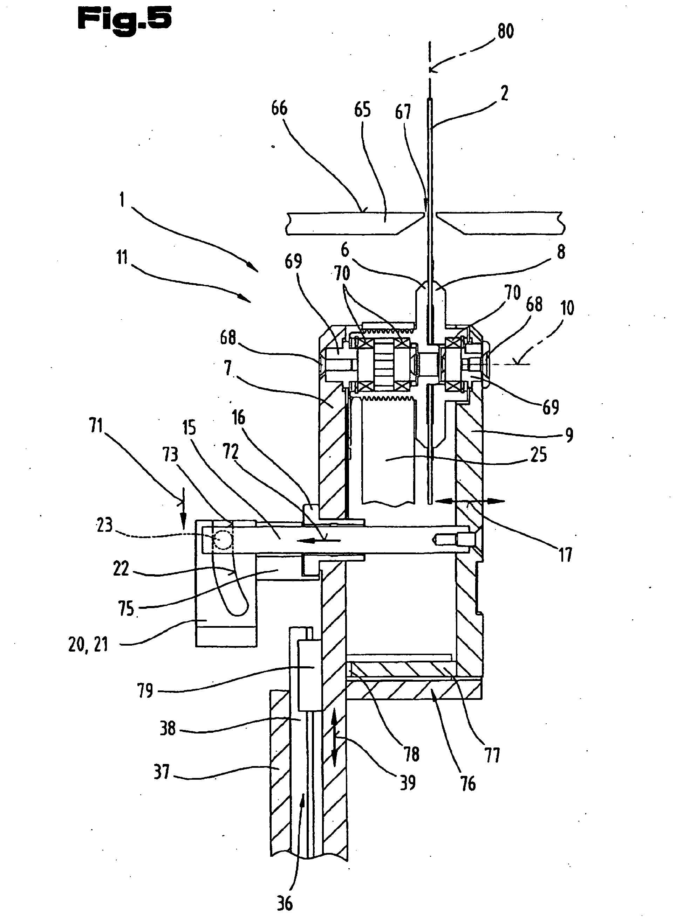

Fig. 5 zeigt einen Schnitt durch das Kreissägeaggregat 1, in dem die Wirkungsweise der Einspannvorrichtung 11 näher erkennbar ist. Man erkennt das Kreissägeaggregat 1, angeordnet unterhalb eines Auflagetisches 65 einer Kreissägemaschine z.B. einer Formatkreissäge oder einer Plattenaufteilsäge, wobei die Oberseite des Auflagetisches 65 eine Auflagefläche 66 für Werkstücke bildet. Das Sägeblatt 2 ragt durch eine Öffnung 67 aus dem Auflagetisch heraus und ist dabei zwischen dem ersten Spannflansch 6 und dem zweiten Spannflansch 8 gehalten. Der erste Spannflansch 6 ist am Tragelement 7 drehbar gelagert, wozu in einer Bohrung im Tragelement 7 mit einem Befestigungsmittel 68 z.B. einer Schraube, ein Achseinsatz 69 befestigt ist, auf dem mittels zweier Wälzlager 70 der erste Spannflansch 6 drehbar gelagert ist. Die Wälzlager 70 können dabei als Rillenkugellager ausgebildet sein, zur Aufnahme der durch den Spannvorgang auftretenden Axialkräfte ist jedoch auch die Verwendung von Schrägkugellagern vorteilhaft. Der zweite Spannflansch 8 ist ebenfalls mittels eines Wälzlagers 70 drehbar auf einem mit einem Befestigungsmittel 68 im Spannelement 9 befestigten Achseinsatz 69 gelagert.

Die zum Einspannen des Kreissägeblattes 2 erforderlich Kraft wird durch die Führungssäulen 15 in das Spannelement 9 eingeleitet, und zwar indem das Kurvenelement 20 in Form einer Führungskulisse 21 quer zu der Führungssäule 15 in Spannrichtung 71 verstellt wird, wodurch im Zusammenwirken der am Kurvenelement 20 ausgebildeten Steuerkurve 22 mit dem jeweils am Ende einer Führungssäule 15 befestigten Abtastelement 23 das Spannelement 9 in Einspannrichtung 72 gezogen wird. Die Steuerkurve 22 ist im Ausführungsbeispiel kreisbogenförmig mit einem im Extrempunkt anschließenden, geradlinigen Sperrabschnitt 73. Die kreisbogenförmige Steuerkurve 23 wirkt auf das Abtastelement 23 wie ein Keil mit abnehmendem Keilwinkel, wodurch mit zunehmender Verschiebung des Kurvenelements 20 in Spannrichtung 71 eine immer höher werdende Kraftübersetzung zwischen der Verstellkraft in Spannrichtung 71 und der Einspannkraft in Einspannrichtung 72 erzielt wird. Nach Überschreiten des Extrempunktes der kreisbogenförmigen Steuerkurve 22 wird das Abtastelement 23 durch den geradlinigen Sperrabschnitt 73 in der maximal gespannten Position fixiert, wodurch auch eine sichere Einspannung des Kreissägeblattes 2 sichergestellt ist.

Wie in Fig. 1 erkennbar, sind die Kurvenelemente 20 mittels zweier Säulenführungen 74 quer zu den Führungssäulen 15 verstellbar gelagert. Damit die beträchtlichen Einspannkräfte nicht von diesen Säulenführungen 74 alleine aufgenommen werden müssen, sind die Kurvenelemente 20 mittels Stützelementen 75 gegenüber dem Tragelement 7 oder den Führungsbuchsen 16 abgestützt. Diese Stützelemente 75 aus einem Metall mit niedrigem Reibungskoeffizienten sind dazu mit dem Tragelement 7 fest verbunden, z.B. durch Verschraubung und bilden jeweils eine Gleitfläche, an der ein Kurvenelement 20 während der Verstellung in Richtung des Pfeils 19 entlangleiten kann und die von der Führungssäule 15 auf das Kurvenelement 20 ausgeübte Einspannkraft auf das Tragelement 7 abtragen wird. Die Säulenführungen 74 sind dadurch weitgehend frei von Biegekräften. Als Werkstoff für die Stützelemente 75 haben sich Gleitlagerwerkstoffe aus Nichteisenmetall-Legierungen z.B. Kupferlegierungen, Bleilegierungen, Lagerbronzen oder ähnliches als vorteilhaft erwiesen, um einen Wirkungsgradverlust durch hohe Reibung sowie Verschleiß zwischen den Kurvenelementen 20 und den Stützelementen 75 zu vermeiden.

Fig. 5 zeigt als weiteren möglichen Teil der Führungsanordnung 13 eine ebenfalls parallel zur Kreissägeblattachse 10 ausgerichtete Schienenführung 76, durch die ein am Spannelement 9 befestigter Führungsteil 77 zwischen am Tragelement 7 ausgebildeten Führungsnuten 78 geführt ist wodurch zusätzlich zu den Führungssäulen 15 in den Führungsbuchsen 16 eine stabile Geradführung des Spannelements 9 gegenüber dem Tragelement 7 erreicht wird.

Fig. 5 zeigt auch die Linearführung 36 mittels derer die gesamte Einspannvorrichtung 11 und damit auch das Kreissägeblatt 2 relativ zur Grundplatte 37 in zu dieser paralleler Richtung gemäß Pfeil 39 verstellbar ist. Am Tragelement 7 sind dazu Führungselemente 79 befestigt, die entlang von den Führungsschienen 38 geführt sind. Durch diese Verstellmöglichkeit kann der Überstand des Kreissägeblattes 2 gegenüber der Auflagefläche 66 verändert werden, wobei eine Schnittebene 80 des Kreissägeblattes 2 unverändert bleibt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Das Ausführungsbeispiel beschreibt eine mögliche Ausführungsvariante der Kreissägemaschine, wobei an dieser Stelle bemerkt sei, dass die Erfindung nicht auf die speziell dargestellten Ausführungsvariante derselben eingeschränkt ist, sondern vielmehr auch diverse Kombinationen der in der Beschreibung enthaltenen, einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis der Kreissägemaschine bzw. des Aufbaus des Kreissägeaggregats 1 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1 bis 5 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Kreissägeaggregat
- 2: Kreissägeblatt
- 3: Ritzsägeblatt
- 4: Sägewelle
- 5: Antriebsflansch

- 6: Spannflansch
- 7: Tragelement
- 8: Spannflansch
- 9: Spannelement
- 10: Kreissägeblattachse

- 11: Einspannvorrichtung
- 12: Verstellanordnung
- 13: Führungsanordnung
- 14: Verstellantrieb
- 15: Führungssäule

- 16: Führungsbuchse
- 17: Pfeil
- 18: Kurvengetriebe
- 19: Pfeil
- 20: Kurvenelement

- 21: Führungskulisse
- 22: Steuerkurve
- 23: Abtastelement
- 24: Fluidzylinder
- 25: Hauptantriebsriemen

- 26: Umlenkrolle
- 27: Antriebsrad
- 28: Antriebswelle
- 29: Winkelgetriebe
- 30: Kegelradgetriebe

- 31: Antriebsmotor
- 32: Antriebsdurchmesser
- 33: Abtriebsdurchmesser
- 34: Motorwelle
- 35: Verstellvorrichtung

- 36: Linearführung
- 37: Grundplatte
- 38: Führungsschiene
- 39: Pfeil
- 40: Verstellzylinder

- 41: Schwenkführungsplatte
- 42: Montageplatte
- 43: Schwenkführungsschiene
- 44: Führungselement
- 45: Ritzsägeaggregat

- 46: Halterung
- 47: Querführung
- 48: Höhenführung
- 49: Pfeil
- 50: Pfeil

- 51: Welle
- 52: Antriebsflansch
- 53: Gegenflansch
- 54: Antriebsriemen
- 55: Umlenkelement

- 56: Schwenkhebel
- 57: Führung
- 58: Schwenklager
- 59: Stellantrieb
- 60: Spanneinrichtung

- 61: Spannelement
- 62: Spannhebel
- 63: Pfeil
- 64: Pfeil
- 65: Auflagetisch

- 66: Auflagefläche
- 67: Öffnung
- 68: Befestigungsmittel
- 69: Achseinsatz
- 70: Wälzlager

- 71: Spannrichtung
- 72: Einspannrichtung
- 73: Sperrabschnitt
- 74: Säulenführung
- 75: Stützelement

- 76: Schienenführung
- 77: Führungsteil
- 78: Führungsnut
- 79: Führungselement
- 80: Schnittebene

- 81: Antriebselement
- 82: Außenseite
- 83: Umfangsfläche

## Patentansprüche

1. Kreissägemaschine mit einer Einspannvorrichtung (11) für ein Kreissägeblatt (2), umfassend ein Tragelement (7) mit einem drehbar gelagerten ersten Spannflansch (6) und ein zwischen einer Spannstellung und einer Lösestellung verstellbares Spannelement (9) mit einem koaxial zum ersten Spannflansch (6) drehbar gelagerten zweiten Spannflansch (8), wobei ein Spannflansch (6, 8), insbesondere über einen Riemen, antreibbar ist und zum Einspannen des Kreissägeblatts (2) zwischen den Spannflanschen (6, 8) das Spannelement (9) aus der Lösestellung in Richtung des Tragelements (7) in die Spannstellung verbracht wird wobei das Spannelement (9) mit dem zweiten Spannflansch (8) mittels einer, eine außerhalb des größtmöglichen Kreissägeblattdurchmessers angeordnete Führungsanordnung (13) und einen Verstellantrieb (14) umfassenden Verstellanordnung (12) zwischen der Lösestellung und der Spannstellung relativ zum Tragelement (7) mit dem ersten Spannflansch (6) verstellbar ist, **dadurch gekennzeichnet, dass** die Führungsanordnung (13) als parallel zur Achsrichtung (10) der Spannflansche (6, 8), verlaufende Linearführung ausgebildet ist.

2. Kreissägemaschine nach Anspruch 1, **dadurch gekennzeichnet, dass** die Führungsanordnung (13) eine Schienenführung (76) umfasst.

3. Kreissägemaschine nach Anspruch 1 oder 2, **dadurch gekennzeichnet, dass** die Führungsanordnung (13) zumindest eine am Spannelement (9) oder am Tragelement (7) befestigte, gerade Führungssäule (15) und eine diese führende, am Tragelement (7) bzw. am Spannelement (9) befestigte Führungsbuchse (16) umfasst.

4. Kreissägemaschine nach Anspruch 3, **dadurch gekennzeichnet, dass** der Verstellantrieb (14) mit einem durch die Führungsbuchse (16) ragenden Endabschnitt der Führungssäule (15) gekoppelt ist und diese in der Spannstellung als Zugelement zwischen dein Tragelement (7) und dem Spannelement (9) wirkt.

5. Kreissägemaschine nach einem der Ansprüche 1 bis 4, **dadurch gekennzeichnet, dass** der Verstellantrieb (14) und das Spannelement (9) über ein, eine Stellkraft übertragendes Kurvengetriebe (18) gekoppelt sind, welches ein mit dem beweglichen Teil des Verstellantriebs (14) verbundenes Kurvenelement (20) mit einer Steuerkurve (22) und ein mit dem Spannelement (9) verbundenes, mit der Steuerkurve (22) zusammenwirkendes Abtastelement (23) umfasst.

6. Kreissägemaschine nach Anspruch 5, **dadurch gekennzeichnet, dass** das Kurvenelement (20) in einer zum Tragelement (7) weitgehend parallelen Bewegungsrichtung, verstellbar ist und die Steuerkurve (22) einen bogenförmig, insbesondere kreisbogenförmig gekrümmten Abschnitt aufweist.

7. Kreissägemaschine nach einem der Ansprüche 5 bis 6, **dadurch gekennzeichnet, dass** die Steuerkurve (22) einen an den bogenförmig gekrümmten Abschnitt anschließenden, zur Verstellrichtung des Spannelements (9) rechtwinkeligen, geradlinigen Sperrabschnitt (73) aufweist.

8. Kreissägemaschine nach einem der Ansprüche 5 bis 7, **dadurch gekennzeichnet, dass** Kurvenelement (20) durch eine Führungskulisse (21), in der das Abtastelement (23) geführt ist, gebildet ist.

9. Kreissägemaschine nach einem der Ansprüche 5 bis 8, **dadurch gekennzeichnet, dass** das Abtastelement (23) in der Spannstellung eine Über-Totpunkt-Stellung an der Steuerkurve (22) einnimmt.

10. Kreissägemaschine nach einem der Ansprüche 1 bis 9, **dadurch gekennzeichnet, dass** der Verstellantrieb (14) und das Spannelement (9) über ein, eine Stellkraft übertragendes, Drehgelenkgetriebe, insbesondere ein Kniehebelgetriebe gekoppelt sind.

11. Kreissägemaschine nach einem der Ansprüche 1 bis 10, **dadurch gekennzeichnet, dass** der Verstellantrieb (14) einen Linearantrieb umfasst.

12. Kreissägemaschine nach Anspruch 11, **dadurch gekennzeichnet, dass** der Verstellantrieb (14) einen Fluidzylinder (24) umfasst und dieser bei Abfall des Fluiddrucks durch Gewichtskraft oder Federkraft selbsttätig in eine mit der Spannstellung korrespondierende Ruhestellung übergeht bzw. diese beibehält oder der Fluidzylinder (24) bei Abfall des Fluiddrucks durch ein Steuerventil in seiner Stellung blockiert wird.

13. Kreissägemaschine nach Anspruch 11 oder 12, **dadurch gekennzeichnet, dass** der Verstellantrieb (14) einen Gewindespindeltrieb umfasst.

14. Kreissägemaschine nach einem der Ansprüche 1 bis 13, **dadurch gekennzeichnet, dass** die Verstellanordnung (12) ein das Spannelement (9) und/oder einen Spannflansch (6, 8) in Richtung der Spannstellung drückendes Federelement, insbesondere eine Tellerfeder umfasst.

15. Kreissägemaschine nach einem der Ansprüche 1 bis 14, **dadurch gekennzeichnet, dass** die Einspannvorrichtung (11) mittels einer Linearführung (36) gegenüber einer mit einem Grundgestell der Kreissägemaschine verbundenen Grundplatte (37) in der Kreissägeblattebene verstellbar ist.

16. Kreissägemaschine nach Anspruch 15, **dadurch gekennzeichnet, dass** die Grundplatte (37) um eine zum Kreissägeblatt (2) parallele Schwenkachse verstellbar gelagert ist.

17. Kreissägemaschine nach einem der Ansprüche 1 bis 16, **dadurch gekennzeichnet, dass** der erste Spannflansch (6) und/oder der zweite Spannflansch (8) mittels eines Schrägkugenagers am Tragelement (7) bzw. am Spannelement (9) gelagert ist.

## Claims

1. Circular saw machine with a clamping device (11) for a circular saw blade (2), comprising a support element (7) with a first rotatably mounted clamping flange (6) and a clamping element (9) which can be moved between a clamping position and a release position with a second clamping flange (8) mounted so as to be rotatable coaxially with the first clamping flange (6), and one clamping flange (6, 8) can be driven, in particular by means of a belt, and, in order to clamp the circular saw blade (2) between the clamping flanges (6, 8), the clamping element (9) is moved out of the release position in the direction of the support element (7) into the clamping position, and the clamping element (9) with the second clamping flange (8) can be moved by means of a displacement arrangement (12) comprising a guide arrangement (13) disposed outside of the biggest possible circular saw blade diameter and a displacement drive (14) between the release position and the clamping position relative to the support element (7) with the first clamping flange (6), **characterised in that** the guide arrangement (13) is provided in the form of a linear guide extending parallel with the axial direction (10) of the clamping flanges (6, 8).

2. Circular saw machine as claimed in claim 1, **characterised in that** the guide arrangement (13) has a rail guide (76).

3. Circular saw machine as claimed in claim 1 or 2, **characterised in that** the guide arrangement (13) comprises at least one straight guide post (15) secured to the clamping element (9) or to the support element (7) and, guiding it, a guide bush (16) secured to the support element (7) or to the clamping element (9).

4. Circular saw machine as claimed in claim 3, **characterised in that** the displacement drive (14) is coupled with an end portion of the guide post (15) extending through the guide bush (16) and acting as a tensioning element between the support element (7) and the clamping element (9) in the clamping position.

5. Circular saw machine as claimed in one of claims 1 to 4, **characterised in that** the displacement drive (14) and the clamping element (9) are coupled via a cam mechanism (18) comprising a cam element (20) connected to the moving part of the displacement drive (14) with a control cam (22) and a caliper element (23) connected to the clamping element (9) co-operating with the control cam (22).

6. Circular saw machine as claimed in claim 5, **characterised in that** the cam element (20) can be displaced in a direction of motion substantially parallel with the support element (7) and the control cam (22) has an arc-shaped, in particular circular arc-shaped, curved portion.

7. Circular saw machine as claimed in one of claims 5 to 6, **characterised in that** the control cam (22) has a straight locking portion (73), disposed at a right angle with respect to the displacement direction of the clamping element (9), adjoining the arc-shaped curved portion.

8. Circular saw machine as claimed in one of claims 5 to 7, **characterised in that** the cam element (20) is provided in the form of a guide link (21) in which the caliper element (23) is guided.

9. Circular saw machine as claimed in one of claims 5 to 8, **characterised in that** the caliper element (23) assumes a top dead centre position on the control cam (22) in the clamping position.

10. Circular saw machine as claimed in one of claims 1 to 9, **characterised in that** the displacement drive (14) and the clamping element (9) are coupled via a swivel mechanism, in particular a toggle mechanism, transmitting an actuating force.

11. Circular saw machine as claimed in one of claims 1 to 10, **characterised in that** the displacement drive (14) has a linear drive.

12. Circular saw machine as claimed in claim 11, **characterised in that** the displacement drive (14) has a fluid cylinder (24) which automatically switches into a non-operating position corresponding to the clamping position due to force of gravity or spring force and remains in it if the fluid pressure drops, or the fluid cylinder (24) is blocked in its position by means of a control valve if the fluid pressure drops.

13. Circular saw machine as claimed in claim 11 or 12, **characterised in that** the displacement drive (14) has a threaded spindle drive.

14. Circular saw machine as claimed in one of claims 1 to 13, **characterised in that** the displacement arrangement (12) has a spring element, in particular a plate spring, forcing the clamping element (9) and/or a clamping flange (6, 8) in the direction of the clamping position.

15. Circular saw machine as claimed in one of claims 1 to 14, **characterised in that** the clamping mechanism (11) can be displaced by means of a linear guide (36) relative to a base plate (37) in the circular saw blade plane connected to a base frame of the circular saw machine.

16. Circular saw machine as claimed in claim 15, **characterised in that** the base plate (37) is mounted so as to be displaceable about a pivot axis parallel with the circular saw blade (2).

17. Circular saw machine as claimed in one of claims 1 to 16, **characterised in that** the first clamping flange (6) and/or the second clamping flange (8) is mounted on the support element (7) respectively on the clamping element (9) by means of an angular-contact ball bearing.

## Revendications

1. Scie circulaire dotée d'un appareil de serrage (1) pour une lame de scie circulaire (2), comprenant un élément de support (7) avec une première bride de serrage (6) logée d'une manière tournante et un élément de serrage (9) déplaçable entre une position de serrage et une position de relâchement avec une deuxième bride de serrage (8) logée d'une manière tournante, coaxiale à la première bride de serrage (6), où une bride de serrage (6, 8) peut être entraînée, en particulier par une courroie et, pour le serrage de la lame de scie circulaire (2) entre les brides de serrage (6, 8), l'élément de serrage (9) est amené de la position de relâchement en direction de l'élément de support (7) dans la position de serrage, où l'élément de serrage (9) est déplaçable avec la deuxième bride de serrage (8) au moyen d'un agencement de déplacement (12) comprenant un agencement de guidage (13) disposé à l'extérieur du diamètre le plus grand possible de la lame de scie circulaire et une commande de déplacement (14), entre la position de relâchement et la position de serrage relativement à l'élément de support (7) avec la première bride de serrage (6), **caractérisée en ce que** l'agencement de guidage (13) est réalisé comme un guidage linéaire s'étendant parallèlement à la direction d'axe (10) des brides de serrage (6, 8).

2. Scie circulaire selon la revendication 1, **caractérisée en ce que** l'agencement de guidage (13) comprend un guidage à rails (76).

3. Scie circulaire selon la revendication 1 ou 2, **caractérisée en ce que** l'agencement de guidage (13) comprend au moins une colonne de guidage rectiligne (15) fixée à l'élément de serrage (9) ou à l'élément de support (7) et une douille de guidage (16) guidant celle-ci, fixée à l'élément de support (7) respectivement à l'élément de serrage (9).

4. Scie circulaire selon la revendication 3, **caractérisée en ce que** la commande de déplacement (14) est couplée avec une section d'extrémité de la colonne de guidage (15) faisant saillie à travers la douille de guidage (16), et celle-ci en position de serrage, agit comme élément de traction entre l'élément de support (7) et l'élément de serrage (9).

5. Scie circulaire selon l'une des revendications 1 à 4, **caractérisée en ce que** la commande de déplacement (14) et l'élément de serrage (9) sont couplés par une commande à cames (18) transférant une force de positionnement qui comprend un élément de came (20) relié à la partie mobile de la commande de déplacement (14), avec une came de commande (22) et un élément de balayage (23) relié à l'élément de serrage (9), coopérant avec la came de commande (22).

6. Scie circulaire selon la revendication 5, **caractérisée en ce que** l'élément de came (20) est ajustable dans une direction de déplacement sensiblement parallèle à l'élément de support (7), et la came de commande (22) présente une section courbée en forme d'arc, en particulier en forme d'arc de cercle.

7. Scie circulaire selon l'une des revendications 5 à 6, **caractérisée en ce que** la came de commande (22) présente une section de serrage rectiligne (73), faisant suite à la section courbée en forme d'arc, à angle droit à la direction de déplacement de l'élément de serrage (9).

8. Scie circulaire selon l'une des revendications 5 à 7, **caractérisée en ce que** l'élément de came (20) est formé par une coulisse de guidage (21) dans laquelle est guidé l'élément de balayage (23).

9. Scie circulaire selon l'une des revendications 5 à 8, **caractérisée en ce que** l'élément de balayage (23) occupe en position de serrage une position au-dessus du point mort à la came de commande (22).

10. Scie circulaire selon l'une des revendications 1 à 9, **caractérisée en ce que** la commande de déplacement (14) et l'élément de serrage (9) sont couplés par un mécanisme de transmission à articulation tournante, en particulier un mécanisme à levier coudé.

11. Scie circulaire selon l'une des revendications 1 à 10, **caractérisée en ce que** la commande de déplacement (14) comprend une commande linéaire.

12. Scie circulaire selon la revendication 11, **caractérisée en ce que** la commande de déplacement (14) comprend un cylindre de fluide (24) et celui-ci, lors d'une chute de la pression de fluide, passe en raison du poids ou d'une force de ressort automatiquement dans une position de repos correspondant à la position de serrage respectivement conserve celle-ci ou bien le cylindre de fluide (24), lors d'une chute de la pression du fluide, est bloqué par une vanne de commande dans sa position.

13. Scie circulaire selon la revendication 11 ou 12, **caractérisée en ce que** la commande de déplacement (14) comprend une commande à tige filetée.

14. Scie circulaire selon l'une des revendications 1 à 13, **caractérisée en ce que** l'agencement de déplacement (12) comprend un élément de ressort, en particulier un ressort à disques, poussant l'élément de serrage (9) et/ou une bride de serrage (6, 8) dans la direction de la position de serrage.

15. Scie circulaire selon l'une des revendications 1 à 14, **caractérisée en ce que** le dispositif de serrage (11) est déplaçable au moyen d'un guidage linéaire (36) par rapport à une plaque de base (37) reliée à un châssis de base de la scie circulaire dans le plan de la lame de scie circulaire.

16. Scie circulaire selon la revendication 15, **caractérisée en ce que** la plaque de base (37) est logée d'une manière déplaçable autour d'un axe de pivotement parallèle à la lame de scie circulaire (2).

17. Scie circulaire selon l'une des revendications 1 à 16, **caractérisée en ce que** la première bride de serrage (6) et/ou la deuxième bride de serrage (8) est logée au moyen d'un roulement à billes incliné à l'élément de support (7) respectivement à l'élément de serrage (9).
